# EUROPÄISCHE PATENTSCHRIFT

(11) **EP 1 048 202 B1**
(45) Veröffentlichungstag und Bekanntmachung des Hinweises auf die Patenterteilung: **02.02.2005**
(21) Anmeldenummer: 00108328.6
(22) Anmeldetag: 15.04.2000
(51) Int. Cl.: A01F 15/07, A01F 15/08

(54) **Ballenwickelgerät**
Bale wrapper
Bobineuse à emballer

(30) Priorität: 28.04.1999 DE 19919323
(43) Veröffentlichungstag der Anmeldung: 02.11.2000
(73) Patentinhaber: DEERE & COMPANY, Moline, Illinois 61265-8098 (US)
(72) Erfinder: Viaud, Jean, 70100 Gray (FR)
(74) Vertreter: Magin, Ludwig Bernhard

(56) Entgegenhaltungen:
- EP-A- 0 543 145
- EP-A- 0 893 053
- WO-A-00/27179
- WO-A-96/12399
- DE-A- 4 120 733
- DE-A- 4 243 406

## Beschreibung

Die Erfindung betrifft ein Ballenwickelgerät nach dem Oberbegriff des Anspruch 1.

Ballenwickelgeräte werden zur Verpackung von Ballen vorzugsweise von durch Ballenpressen aus Erntegut, beispielsweise aus Gras, gebildeten Ballen genutzt. Diese werden zur Gewinnung von kleineren Silagemengen komplett in ein luftundurchlässiges Material, beispielsweise eine Folie, eingehüllt.

Die DE-A1-41 20 733 zeigt eine Maschine zum Verpacken eines Ballens mit Folie, mit einem sich auf zwei dicht an der Ballenpresse angeordneten Laufrädern abstützenden Hauptrahmen und einer Vorrichtung zum Verpacken eines Ballens. Der Hauptrahmen ist mit der Ballenpresse starr verbunden und nimmt einen teleskopisch verstellbaren Ballentransportrahmen für den Transport eines Ballens von dem Ballenauswurf der Ballenpresse zu der Vorrichtung zum Verpacken auf.

Die WO-A-00/27179, bei welcher es sich um ein älteres Patentdokument handelt, das nach dem Anmeldetag veröffentlicht wurde, zeigt ein Ballenwickelgerät, welches über eine Deichsel gelenkig mit einem Zugfahrzeug verbunden werden kann.

Das der Erfindung zugrunde liegende Problem wird in der aufwendigen Gestaltung bekannter Ballenwickelgeräte gesehen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann das Ballenwickelgerät in eine an die Ballenpresse angenäherte Stellung, in der ein durch die Ballenpresse abgegebener Ballen durch den zweiten Rahmenteil bzw. durch an diesem vorgesehene Bauteile bzw. Aufnahmemittel übernommen und in eine von der Ballenpresse beabstandete Stellung gebracht werden, in der der Ballen durch eine Vorrichtung in ein Material beispielsweise in eine luftundurchlässige Folie oder ein Netz etc. gewickelt werden kann, ohne daß die Gefahr besteht, daß der Ballen mit Baugruppen oder -teilen der Ballenpresse in Berührung kommt. So kann beispielsweise auch eine an der Ballenpresse vorgesehene Klappe, die zur Abgabe des Ballens geöffnet und vor der Bildung eines neuen Ballens geschlossen wird, bewegt werden, obwohl sich das Ballenwickelgerät während der Übergabe des Ballens von der Ballenpresse an das Ballenwickelgerät beispielsweise unterhalb der geöffneten Klappe befindet. Nach der Übergabe des Ballens wird der zweite Rahmenteil, der Bauteile zur Aufnahme eines Ballens aufweisen und daher auch als Ballenaufnehmer bezeichnet werden kann, verschwenkt, so daß der zweite Rahmenteil einen vergrößerten Abstand zu der Ballenpresse aufweist. Da das Verschwenken in einer im wesentlichen horizontal ausgerichteten Ebene erfolgt, treten an dem Rahmen des Ballenwickelgerätes während des Verschwenkens keine großen Belastungen auf, wie sie beispielsweise durch ein Anheben des Ballens verursacht würden. Der Aufbau eines erfindungsgemäßen Ballenwickelgeräts ist verhältnismäßig einfach, da eine solche Ausführungsform keine speziellen Führungen erfordert, wie sie beispielsweise an teleskopisch verstellbaren Ballenwickelgeräten vorgesehen sind. Besonders einfach läßt sich ein horizontales Verschwenken realisieren, wenn der zweite Rahmenteil an dem ersten Rahmenteil gelenkig angeschlossen ist, so daß keine zusätzlichen Bauteile benötigt werden. Es ist denkbar, daß der zweite Rahmenteil manuell betätigt wird. Erfindungsgemäß ist ein Betätigungsmittel zum Verschwenken des zweiten Rahmenteils vorzusehen. Dieses Betätigungsmittel könnte einerseits an der Ballenpresse angebracht sein. Vorteilhafterweise wird es aber an dem Ballenwickelgerät vorgesehen, so daß das Betätigungsmittel zusammen mit dem Ballenwickelgerät an die Ballenpresse an- und abgebaut werden kann. Das Betätigungsmittel kann beispielsweise durch ein manuell oder motorisch betätigtes Ketten- oder Riemengetriebe oder einen beispielsweise elektrischen Stellmotor gebildet werden.

Besonders günstig ist es, das Betätigungsmittel als einen Hydraulikmotor vorzusehen, der beispielsweise durch eine an der Ballenpresse oder dem Zugfahrzeug vorgesehene Hydraulikquelle oder durch eine separate Hydraulikquelle mit Druck beaufschlagt werden kann, da dies einfach in der Ausführung ist und solche Hydraulikdruckquellen oftmals bereits an Ballenpressen oder Zugfahrzeugen vorgesehen sind. Es ist aber auch eine pneumatische Betätigung denkbar.

Das Betätigungsmittel kann einenends an der Ballenpresse angebracht sein. Vorteilhaft ist es aber, wenn das Betätigungsmittel mit dem zweiten Rahmenteil und dem ersten Rahmenteil mittel- oder unmittelbar verbunden ist, so daß es einen dauerhaften Bestandteil des Ballenwickelgerätes bildet und nicht an- und abgebaut werden muß. Das Betätigungsmittel kann an den Rahmenteilen direkt beispielsweise auch gelenkig angebracht sein oder mit diesen über weitere Bauteile- oder Baugruppen verbunden sein.

Ist der zweite Rahmenteil beispielsweise mit einem Wickelarm einer Vorrichtung zum Einwickeln eines Ballens oder auch mit der Vorrichtung selbst derart verbindbar, daß ein gemeinsames Verschwenken erfolgen kann, so kann auch der Wickelarm oder die Vorrichtung an die Ballenpresse z. B. zu Transportzwecken angenähert bzw. in einen größeren Abstand von derselben gebracht werden. Es kann aber auch vorgesehen werden, daß der Wickelarm und der zweite Rahmenteil jeweils über ein oder mehrere unabhängige Betätigungsmittel verschwenkt werden können, wobei deren Bewegung auch in Abhängigkeit von dem jeweiligen anderen Betätigungsmittel erfolgen kann.

Hängt die Stellung des zweiten Rahmenteils von einem oder mehreren Ausgabewerten wenigstens eines Sensors ab, so kann das Verschwenken des zweiten Rahmenteils teilweise oder vollständig automatisch ablaufen. Der Sensor nimmt vorzugsweise zumindest einen Betriebszustand der Ballenpresse, beispielsweise die Größe des Ballens, das Fortschreiten des Preßvorgangs oder aber die Stellung einer Klappe auf und gibt diesen beispielsweise in Form eines optischen oder akustischen Signals an eine Bedienungsperson, die das Betätigungsmittel aktiviert, weiter. Besonders vorteilhaft ist es aber, wenn der oder die Ausgabewert(e) des Sensors von einer beispielsweise elektronischen Steuerung aufgenommen werden, die das Betätigungsmittel ansteuert bzw. aktiviert. Der Sensor ist vorzugsweise im Bereich der Klappe angeordnet, die eine Öffnung freigibt und verschließt, durch die ein Ballen nach abgeschlossener Ballenbildung von der Ballenpresse abgegeben wird. Der Sensor kann beispielsweise die Stellung der Klappe aufnehmen, das heißt feststellen, ob die Klappe geöffnet oder geschlossen ist oder sich in einer Zwischenstellung befindet, so daß die Stellung des zweiten Rahmenteils entsprechend beeinflußt werden kann. Beispielsweise kann vorgesehen sein, daß der zweite Rahmenteil erst dann von der Ballenpresse weggeschwenkt wird, wenn die Klappe vollständig geöffnet ist, damit es zu keiner Kollision zwischen der Klappe und dem Ballenwickelgerät mit dem Ballen kommen kann.

Zumindest an dem zweiten Rahmenteil können wenigstens zwei Walzen zur Aufnahme eines Ballens vorgesehen sein. Der Ballen wird von den Walzen aufgenommen und gehalten. Wenigstens eine der Walzen kann beispielsweise durch einen Motor antreibbar sein, wodurch auch der Ballen in Rotation versetzt werden kann, wodurch ein vollständiges Einwickeln des Ballens beispielsweise in Folie ermöglicht wird. Es ist auch möglich, Gruppen von Walzen, beispielsweise zwei Gruppen von paarweise angeordneten Walzen, von denen eine oder mehrere Walzen angetrieben sein können, oder einen üblichen Wickeltisch zur Aufnahme des Ballens vorzusehen, auf dem der Ballen beispielsweise ebenfalls über Walzen oder über antreibbare Riemen in Rotation versetzt werden kann. Wenigstens eine der Walzen bzw. ein Paar oder eine Gruppe von Walzen kann beispielsweise in einer an dem zweiten Rahmenteil vorgesehenen Führung, vorzugsweise in zumindest annähernd horizontaler Richtung, verschiebbar angeordnet sein, wodurch der Ballen nach Beendigung des Wickelvorgangs leicht abgelegt werden kann.

Schließen der erste Rahmenteil und der zweite Rahmenteil, zumindest wenn sich der zweite Rahmenteil in seiner von Ballenpresse weiter beabstandeten Stellung befindet, zwischen sich einen vorzugsweise zumindest annähernd rechten Winkel ein, so resultieren hieraus kompakte Abmessungen des Ballenwickelgerätes und die Möglichkeit, den Ballen störungsfrei auf dem Boden abzulegen.

Ist der zweite Rahmenteil zumindest in seiner der Ballenpresse angenäherten Stellung dem ersten Rahmenteil benachbart angeordnet, so ergibt sich eine geringe Baulänge des Ballenwickelgerätes, die auch zum Transport des an eine Ballenpresse angeschlossenen Ballenwickelgerätes vorteilhaft sein kann.

Vorteilhafterweise stützt sich der Rahmen einenends über zumindest ein Stützrad auf dem Untergrund ab. Ist der Rahmen an der Ballenpresse anderenends um eine vorzugsweise horizontale Achse vertikal verschwenkbar angeschlossen, so stützt das Stützrad das Gewicht des Ballens dauerhaft auf dem Untergrund ab, wodurch der Rahmen und die Verbindung zwischen der Ballenpresse und dem Ballenwickelgerät entlastet wird. Es ist aber auch der Einsatz zumindest eines Stützrades bei einer starren oder anderweitig gelagerten Verbindung zwischen der Ballenpresse und dem Ballenwickelgerät denkbar.

In der Zeichnung ist ein nachfolgend näher beschriebenes Ausführungsbeispiel der Erfindung dargestellt. Es zeigt:
- Fig. 1: ein an eine Ballenpresse angeschlossenes Ballenwickelgerät in einer ersten Stellung, die das Ballenwickelgerät zum Einwickeln bzw. Verpacken eines Ballens einnimmt, und
- Fig. 2: das Ballenwickelgerät aus Fig. 1 in einer zweiten Stellung, die das Ballenwickelgerät einnimmt, um einen von der Ballenpresse abgegebenen Ballen aufzunehmen.

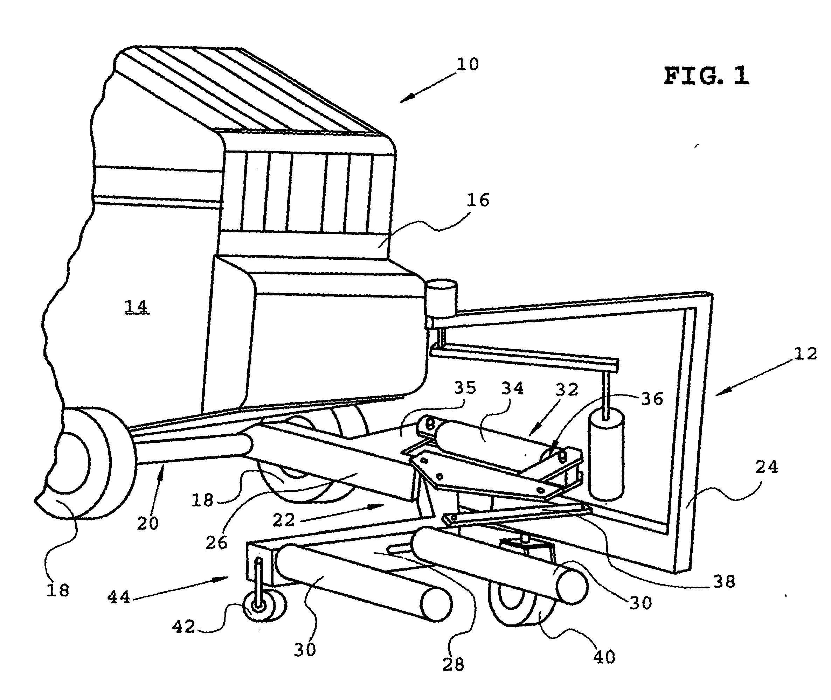

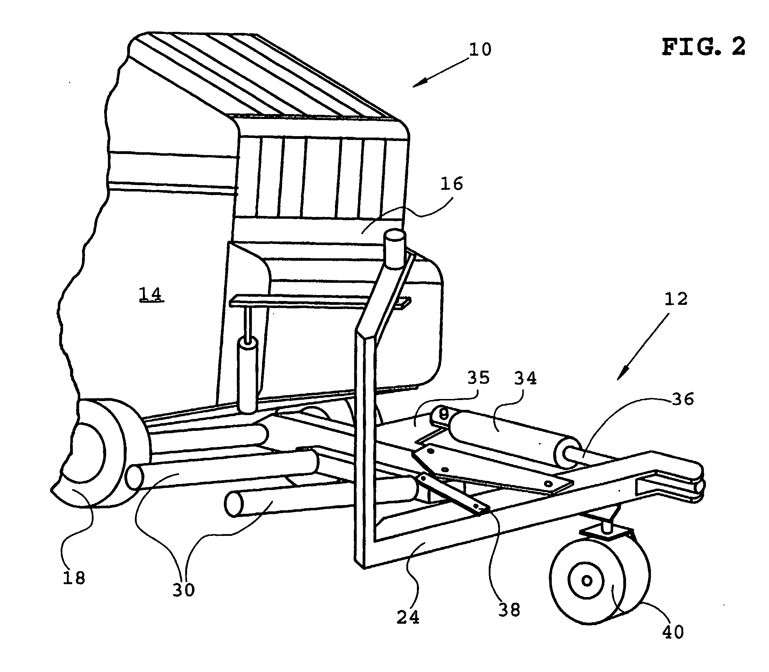

Fig. 1 und Fig. 2 zeigen eine an ein nicht gezeigtes Zugfahrzeug, wie beispielsweise eine landwirtschaftliche Arbeitsmaschine bzw. einen Ackerschlepper, anhängbare Ballenpresse 10 mit einem angeschlossenen Ballenwickelgerät 12 zum Einpacken bzw. Einwickeln eines nicht gezeigten Ballens in ein vorzugsweise luftundurchlässiges Material, wie beispielsweise eine Folie.

Die nur teilweise dargestellte Ballenpresse 10 weist ein Gehäuse 14 auf, das einen nicht gezeigten Mechanismus zur Bildung eines Rundballens, beispielsweise in der Art eines bekannten Ballenbildungsmechanismus mit umlaufenden Riemen, beherbergt. In einem rückwärtigen Bereich des Gehäuses 14 ist eine Klappe 16 vorgesehen, die nach abgeschlossenem Ballenbildungsvorgang geöffnet werden kann, um den Rundballen aus dem Inneren der Ballenpresse 10 zu entlassen. Das Gehäuse 14 stützt sich mittels Laufrädern 18 auf dem Boden ab. Die Laufräder 18 sind an das Gehäuse 14 über eine Achse 20 angeschlossen und sind üblicherweise nicht angetrieben.

Das Ballenwickelgerät 12 weist einen Rahmen 22 auf, der eine Vorrichtung 24 zum Einwickeln oder Verpacken eines Ballens mit einem Wickelarm 25 trägt, wie sie beispielsweise in-der DE-A1-41 20 733 ausführlich beschrieben wird.

Der Rahmen 22 ist geteilt ausgebildet und weist einen ersten Rahmenteil 26 und einen zweiten Rahmenteil 28 auf, die gelenkig miteinander verbunden sind. An dem zweiten Rahmenteil 28 sind in etwa parallel ausgerichtete sich in zumindest annähernd horizontaler Richtung erstreckende Walzen 30 zur Aufnahme eines von der Ballenpresse 10 abgegebenen Ballens vorgesehen, von denen zumindest eine entlang des Rahmens 22 bzw. entlang einer nur andeutungsweise gezeigten Führung an dem zweiten Rahmenteil 28 linear verschoben werden kann, um den Ballen nach erfolgtem Wickelvorgang auf dem Boden ablegen zu können. Die Walzen 30 können durch einen nicht dargestellten Motor in Rotation versetzt werden, so daß ein auf den Walzen 30 aufliegender Ballen in Drehung versetzt und von dem Wickelarm 25 der Vorrichtung 24 vollständig mit Material umwickelt werden kann. Anstelle einzelner Walzen 30 könnten auch paarweise oder anderweitig gruppierte Walzen oder ein üblicher Wickeltisch, auf dem der Ballen beispielsweise über angetriebene Riemen in Rotation versetzt werden kann, eingesetzt werden.

An dem Rahmen 22 ist darüber hinaus ein Betätigungsmittel 32 in Form eines doppeltwirkenden Hydraulikmotors mit einem Zylinder 34 und einem Kolben 36 vorgesehen, der durch eine nicht gezeigte Druckquelle mit Hydraulikdruck beaufschlagt werden kann. Das Betätigungsmittel 32 ist einenends mit seinem Zylinder 34 an einem Vorsprung 35, der von dem ersten Rahmenteil 26 horizontal zur Außenseite des Ballenwickelgerätes 12 hin absteht, und andernends mit seinem Kolben 36 an dem Wickelarm 25 angeschlossen, der mit dem ersten Rahmenteil 26 derart verbunden ist, daß er um eine vertikale Schwenkachse verschwenkbar ist. Der Wickelarm 25 ist über einen Hebel 38 mit dem zweiten Rahmenteil 28 verbunden, wobei der Hebel 38 sowohl an dem Wickelarm 25 als auch an dem zweiten Rahmenteil 28 gelenkig angeschlossen ist.

Der erste Rahmenteil 26 ist andernends an der Achse 20 der Ballenpresse 10 in einem Seitenbereich der Ballenpresse 10 über ein nicht dargestelltes Lager derart angeschlossen, daß er um eine zumindest annähernd horizontal ausgerichtete Schwenkachse vertikal verschwenken kann, ansonsten aber keinen weiteren Bewegungsfreiheitsgrad aufweist.

Der Rahmen 22 stützt sich über ein Stützrad 40 auf dem Untergrund ab, das als Nachlaufrad bzw. Pendelrad ausgebildet ist, das heißt, das derart gelagert ist, daß es um eine zumindest annähernd vertikale Achse frei verschwenken kann, um der durch das Zugfahrzeug bzw. durch die Ballenpresse 12 vorgegebenen Fahrtrichtung zu folgen. Das Stützrad 40 ist an dem ersten Rahmenteil 26 im Bereich des Schwerpunkts des Ballenwickelgerätes 12 im unbelasteten Zustand, das heißt, wenn sich kein Ballen auf dem Ballenwickelgerät 12 befindet, angeordnet. An dem Rahmen 22 kann noch ein weiteres, kleineres Hilfsstützrad 42 vorgesehen sein, das bei unbelastetem Ballenwickelgerät 12 den Untergrund üblicherweise nicht berührt und das in dem gezeigten Ausführungsbeispiel als ein frei schwenkbares Nachlaufrad ausgeführt ist, das an dem zweiten Rahmenteil 28 in dessen freiem Endbereich 44 angebracht ist.

Im Fahrbetrieb, wenn das Ballenwickelgerät 12 im durch einen Rundballen unbelastetem Zustand von der an das Zugfahrzeug angehängten Ballenpresse 10 gezogen wird, stützt sich das Ballenwickelgerät 12 nur über das Stützrad 40 auf dem Boden ab. Die in vertikaler Richtung verschwenkbare Lagerung des Rahmens 22 an der Achse 20 der Ballenpresse 10 ermöglicht es dem Ballenwickelgerät 12, der Kontour des Untergrunds zu folgen, wobei das Stützrad 40 immer in Kontakt mit dem Untergrund bleibt. Durch die in horizontaler Richtung unbewegliche Lagerung des Rahmens 22 ist auch ein Zurücksetzen des Verbundes von Ballenpresse 10 und Ballenwickelgerät 12 möglich, ohne daß es zu einem Ausscheren des Ballenwickelgerätes 12 kommen kann.

Auch im Wickelbetrieb, das heißt, wenn das Ballenwickelgerät 12 durch einen von der Ballenpresse 10 nach Abschluß des Preßvorgangs abgegebenen Ballen belastet wird, stützt sich das Ballenwickelgerät 12 über das Stützrad 40 auf dem Untergrund ab. Durch das zusätzliche Gewicht des Ballens kann auch das Hilfsstützrad 42, beispielsweise bei weichem Untergrund, kurzzeitig in Kontakt mit dem Untergrund gelangen, da sich der Rahmen 22 im Bereich der ihm innewohnenden Flexibilität tordieren kann. Der Rahmen 22 kann sich dann über das Hilfsstützrad 42 auf dem Untergrund abstützen, um einer übermäßigen Torsion des Rahmens 22 und damit Beschädigungen vorzubeugen.

Durch das Betätigungsmittel 32 kann der Rahmen 22 des Ballenwickelgeräts 12 zwischen einer in Fig. 2 gezeigten Übernahmestellung und einer in Fig. 1 dargestellten Wickelstellung verstellt werden. Hierzu wird das Betätigungsmittel 32 durch die nicht gezeigte Hydraulikdruckquelle mit Druck beaufschlagt, wodurch der Kolben 36 in dem Zylinder 34 aus- bzw. eingefahren wird. Ist der Kolben 36 eingefahren, befindet sich der Rahmen 22 in der in Fig. 1 gezeigten Wickelstellung, in der der erste Rahmenteil 26 und der zweite Rahmenteil 28 in etwa L-artig zueinander ausgerichtet sind. In dieser Stellung befindet sich der zweite Rahmenteil 28 in einem solchen Abstand von der Klappe 16 der Ballenpresse 10, daß ein auf den Walzen 30 aufliegender Ballen durch die Walzen 30 in Rotation versetzt und durch die Vorrichtung 24 mit Material umwickelt werden kann und trotzdem die Klappe 16 wieder geschlossen werden kann, um in der Ballenpresse 10 die Bildung eines neuen Ballens zu ermöglichen.

Um die Übergabe eines Ballens nach Abschluß des Preßvorgangs bei geöffneter Klappe 16 von der Ballenpresse 10 an das Ballenwickelgerät 12 zu erleichtern, wird der zweite Rahmenteil 28 näher an die Ballenpresse 10 herangebracht. Hierzu wird der Kolben 36 des Betätigungsmittels 32 ausgefahren, wodurch der Wickelarm 25 und damit auch der zweite Rahmenteil 28 jeweils um die gelenkige Verbindung mit dem ersten Rahmenteil 26 vorzugsweise um etwa 90° verschwenkt wird, so daß der zweite Rahmenteil 28 an dem ersten Rahmenteil 26 anliegt und die Walzen 30 entsprechend der Darstellung in Fig. 2 derart angeordnet sind, daß der aus der Ballenpresse 10 austretende Ballen durch die Walzen 30 aufgenommen werden kann. Im Anschluß erfolgt ein Einfahren des Kolbens 36 des Betätigungsmittels 32, so daß der Wickelvorgang in der in Fig. 1 gezeigten L-förmigen Stellung des Rahmens 22 durchgeführt und die Klappe 16 geschlossen werden kann.

Eine Verstellung des Betätigungsmittels 32 kann in einfacher Weise beispielsweise durch den Fahrer des nicht gezeigten Zugfahrzeugs veranlaßt werden, indem dieser beispielsweise durch die Betätigung eines Schalters ein Magnetventil betätigt, so daß entweder ein kolbenseitiger Bereich oder ein dem Kolben 36 abgewandter Bereich des Betätigungsmittels 32 mit Druck beaufschlagt wird. Es ist aber auch denkbar, das Ein- und Ausfahren des Kolbens 36 des Betätigungsmittels 32 und damit eine Veränderung der Position des zweiten Rahmenteils 28 bezogen auf den ersten Rahmenteil 26 in Abhängigkeit von dem Betriebszustand der Ballenpresse 10 anzusteuern. Beispielsweise kann die Verstellung in die in Fig. 2 gezeigte Stellung durch ein Ausfahren des Kolbens 36 des Betätigungsmittels 32 dann erfolgen, wenn ein an der Ballenpresse 10 vorgesehener Sensor meldet, daß die Klappe 16 zur Ausgabe des Ballens öffnet oder aber auch wenn ein Sensor meldet, daß der Preß- oder Bindevorgang abgeschlossen ist. Hierzu kann der Ausgabewert des Sensors durch eine Steuereinheit aufgenommen werden, die wiederum entsprechend der zuvor beschriebenen manuellen Betätigung ein Magnetventil ansteuert, über das das Betätigungsmittel 32 mit Druck beaufschlagt wird.

Nach Beendigung des Wickelvorgangs kann die entlang der nur angedeutet gezeigten Führung linear verschieblich angeordnete Walze 30 in ihre von der ersten Walze 30 am weitesten beabstandete Stellung gebracht werden, so daß der Ballen auf dem Untergrund aufliegt. Der Ballen bleibt in dieser Position auf dem Untergrund liegen, während sich das Zugfahrzeug mit der Ballenpresse 10 und dem angeschlossenen Ballenwickelgerät 12 weiterbewegt. Eine Verstellung der Walze 30 kann beispielsweise über einen Hydraulikmotor oder einen anderen Antrieb erfolgen. In einfacher Weise ist auch die Realisierung mittels eines Riegels möglich, der nach Abschluß des Wickelvorgangs gelöst wird, wodurch sich die Walze 30 aufgrund des Gewichts des Ballen gegen die Wirkung einer Feder verschiebt. Nach dem Ablegen des Ballens bringt die Feder die Walze 30 wieder in ihre Ausgangsstellung, in der der Riegel geschlossen wird. Auch das Öffnen und Schließen des Riegels kann über die Steuerung, beispielsweise über einen Magnetschalter, erfolgen. Es ist aber auch möglich, daß die einzelnen Funktionen durch eine Bedienungsperson, beispielsweise durch den Fahrer eines Zugfahrzeugs ausgelöst bzw. gesteuert werden.

## Patentansprüche

1. Ballenwickelgerät mit einem an eine Ballenpresse (10) anschließbaren Rahmen (22), dem eine Vorrichtung (24) zum Einwickeln eines Ballens zugeordnet ist, mit einem ersten Rahmenteil (26) und einem zweiten Rahmenteil (28) zur Aufnahme eines Ballens, wobei der zweite Rahmenteil (28) bezogen auf den ersten Rahmenteil (26) derart verstellbar angeordnet ist, daß der Abstand zwischen dem zweiten Rahmenteil (28) und der Ballenpresse (10) veränderbar ist, **dadurch gekennzeichnet, daß** der zweite Rahmenteil (28) bezogen auf den ersten Rahmenteil (26) in einer zumindest annähernd horizontal ausgerichteten Ebene verschwenkbar ist und der erste Rahmenteil (26) und der zweite Rahmenteil (28) gelenkig verbunden sind, wobei zumindest ein Betätigungsmittel (32) zum Verschwenken des zweiten Rahmenteils (28) vorgesehen ist.

2. Ballenwickelgerät nach Anspruch 1, **dadurch gekennzeichnet, dass** das Betätigungsmittel (32) als ein doppeltwirkender Hydraulikmotor ausgebildet ist.

3. Ballenwickelgerät nach Anspruch 1 oder 2 **dadurch gekennzeichnet, daß** das Betätigungsmittel (32) mit dem zweiten Rahmenteil (26) und dem ersten Rahmenteil (28) oder der Ballenpresse (10) mittel- oder unmittelbar verbunden ist.

4. Ballenwickelgerät nach einem oder mehreren der vorherigen Ansprüche, **dadurch gekennzeichnet, daß** der zweite Rahmenteil (28) mit einem Wickelarm (25) der Vorrichtung (24) zum Einwickeln eines Ballens derart verbindbar ist, daß ein gemeinsames Verschwenken erfolgen kann.

5. Ballenwickelgerät nach einem oder mehreren der vorherigen Ansprüche, **dadurch gekennzeichnet, daß** die Stellung des zweiten Rahmenteils (28) von einem oder mehreren Ausgabewerten wenigstens eines Sensors, der vorzugsweise einen Betriebszustand der Ballenpresse (10) aufnimmt, abhängig ist und daß der Sensor vorzugsweise im Bereich einer Klappe (16) angeordnet ist.

6. Ballenwickelgerät nach einem oder mehreren der vorherigen Ansprüche, **dadurch gekennzeichnet, daß** zumindest der zweite Rahmenteil (28) wenigstens zwei Walzen (30) zur Aufnahme eines Ballens aufweist, wobei vorzugsweise zumindest eine der Walzen (30) in zumindest annähernd horizontaler Richtung verschiebbar angeordnet ist.

7. Ballenwickelgerät nach einem oder mehreren der vorherigen Ansprüche, **dadurch gekennzeichnet, daß** der erste Rahmenteil (26) und der zweite Rahmenteil (28), zumindest wenn sich der zweite Rahmenteil (28) in seiner von der Ballenpresse (10) weiter beabstandeten Stellung befindet, zwischen sich einen vorzugsweise zumindest annähernd rechten Winkel einschießen.

8. Ballenwickelgerät nach einem oder mehreren der vorherigen Ansprüche, **dadurch gekennzeichnet, daß** der zweite Rahmenteil (28) dem ersten Rahmenteil (26) zumindest annähernd benachbart angeordnet ist, wenn sich der zweite Rahmenteil (28) in seiner der Ballenpresse (10) angenäherten Stellung befindet.

9. Ballenwickelgerät nach einem oder mehreren der vorherigen Ansprüche, **dadurch gekennzeichnet, daß** sich der Rahmen (22) über zumindest ein Stützrad (40, 42) auf dem Untergrund abstützt.

## Claims

1. Bale wrapping apparatus with a frame (22) which can be attached to a baler (10) and with which a device (24) for the bale wrapping is associated, with a first frame part (26) and a second frame part (28) for reception of a bale, wherein the second frame part (28) is so adjustably arranged relative to the first frame part (26) that the spacing between the second frame part (28) and the baler (10) can be altered, **characterized in that** the second frame part (28) can be pivoted relative to the first frame part (26) in an at least approximately horizontally aligned plane and the first frame part (26) and the second frame part (28) are hinged together, wherein at least one actuating means (32) is provided for pivoting the second frame part (28).

2. Bale wrapping apparatus according to claim 1, **characterized in that** the actuating means (32) is in the form of a double acting hydraulic motor.

3. Bale wrapping apparatus according to claim 1 or 2, **characterized in that** the actuating means (32) is connected indirectly or directly to the second frame part (28) and the first frame part (26) or the baler (10).

4. Bale wrapping apparatus according to one or more of the preceding claims, **characterized in that** the second frame part (28) can be so connected to a wrapping arm (25) of the device (24) for wrapping a bale that common pivoting can be effected.

5. Bale wrapping apparatus according to one or more of the preceding claims, **characterized in that** the position of the second frame part (28) is dependent on one or more output values of at least one sensor which preferably picks up an operating state of the baler (10) and **in that** the sensor is preferably arranged in the region of a flap (16).

6. Bale wrapping apparatus according to one or more of the preceding claims, **characterized in that** at least the second frame part (28) has at least two rolls (30) for reception of a bale, wherein at least one of the rolls (30) is preferably arranged for displacement in an at least approximately horizontal direction.

7. Bale wrapping apparatus according to one or more of the preceding claims, **characterized in that** the first frame part (26) and the second frame part (28) subtend between them an at least approximate right angle at least when the second frame part (28) is in its position spaced further from the baler (10).

8. Bale wrapping apparatus according to one or more of the preceding claims, **characterized in that** the second frame part (28) is arranged at least closely adjacent to the first frame part (26)when the second frame part (28) is in its position approached to the baler (10).

9. Bale wrapping apparatus according to one or more of the preceding claims, **characterized in that** the frame (22) is supported on the ground by at least one support wheel (40, 42).

## Revendications

1. Appareil pour l'enveloppement de balles comportant un cadre (22) pouvant être réuni à une presse à balles, auquel est associé un dispositif (24) pour l'enveloppement d'une balle, et se composant d'une première portion de cadre (26) et d'une seconde portion de cadre (28) destinées à recevoir une balle, la seconde portion de cadre (28) étant montée réglable par rapport à la première portion de cadre (26) d'une manière telle que la distance entre la seconde portion de cadre (28) et la presse à balles (10) puisse être modifiée, **caractérisé en ce que** la seconde portion de cadre (28) peut pivoter par rapport à la première portion de cadre (26), dans un plan orienté sensiblement horizontalement, et la première et la seconde portions de cadre (26, 28) sont reliées de façon articulée, au moins un moyen d'actionnement (32) étant prévu pour le pivotement de la seconde portion de cadre (28).

2. Appareil pour l'enveloppement de balles selon la revendication 1, **caractérisé en ce que** le moyen d'actionnement (32) est constitué par un moteur hydraulique à double action.

3. Appareil pour l'enveloppement de balles selon la revendication 1 ou 2, **caractérisé en ce que** le moyen d'actionnement (32) est réuni directement ou indirectement à la seconde portion de cadre (26) et à la première portion de cadre (28), ou à la presse à balles (10).

4. Appareil pour l'enveloppement de balles selon l'une ou plusieurs des revendications précédentes, **caractérisé en ce que** la seconde portion de cadre (28) peut être réunie à un bras d'enroulement (25) du dispositif (24) pour l'enveloppement d'une balle, d'une manière telle qu'il peut en résulter un pivotement d'ensemble.

5. Appareil pour l'enveloppement de balles selon l'une ou plusieurs des revendications précédentes, **caractérisé en ce que** la position de la seconde portion de cadre (28) dépend d'une ou plusieurs données fournies par au moins un palpeur qui relève de préférence un état de fonctionnement de la presse à balles (10), et **en ce que** le palpeur est placé de préférence dans la région d'un volet (16).

6. Appareil pour l'enveloppement de balles selon l'une ou plusieurs des revendications précédentes, **caractérisé en ce qu'**au moins la seconde portion de cadre (28) présente au minimum deux rouleaux (30) pour recueillir une balle, au moins l'un des rouleaux (30) étant de préférence monté déplaçable dans une direction au moins à peu près horizontale.

7. Appareil pour l'enveloppement de balles selon l'une ou plusieurs des revendications précédentes, **caractérisé en ce que** la première portion de cadre (26) et la seconde portion de cadre (28), au moins quand la seconde portion de cadre (28) se trouve dans sa position la plus éloignée de la presse à balles, forment entre elles un angle de préférence au moins approchant de 90°.

8. Appareil pour l'enveloppement de balles selon l'une ou plusieurs des revendications précédentes, **caractérisé en ce que** la seconde portion de cadre (28) est au moins à peu près voisine de la première portion de cadre (26) quand la seconde portion de cadre (28) se trouve dans sa position rapprochée de la presse à balles (10).

9. Appareil pour l'enveloppement de balles selon l'une ou plusieurs des revendications précédentes, **caractérisé en ce que** le cadre (22) s'appuie sur le sol par au moins une roue d'appui (40, 42).
